**Europäisches Patentamt**

**European Patent Office**

**Office européen des brevets**

(19)

(11) Veröffentlichungsnummer: **0 160 797**
**B1**

(12) **EUROPÄISCHE PATENTSCHRIFT**

(45) Veröffentlichungstag der Patentschrift:
**04.01.89**

(21) Anmeldenummer: **85102148.5**

(22) Anmeldetag: **27.02.85**

(51) Int. Cl.⁴: **A 61 C 5/10,** A 61 C 13/00

(54) Rohling zur Herstellung zahntechnischer Formteile und Verwendung desselben.

(30) Priorität: **06.03.84 CH 1110/84**

(43) Veröffentlichungstag der Anmeldung:
**13.11.85 Patentblatt 85/46**

(45) Bekanntmachung des Hinweises auf die Patenterteilung:
**04.01.89 Patentblatt 89/1**

(84) Benannte Vertragsstaaten:
**AT BE DE FR GB IT NL SE**

(56) Entgegenhaltungen:
**EP-A-0 066 167**
**EP-A-0 091 876**
**DE-A-2 019 958**
**DE-C-709 290**
**US-A-3 004 343**

(73) Patentinhaber: **Mörmann, Werner H., Dr.med.dent.,**
**Zweiackerstrasse 57, CH- 8053 Zürich (CH)**
Patentinhaber: **Brandestini, Marco, Dr.sc.techn.,**
**Gartenstrasse 10, CH- 8702 Zollikon (CH)**

(72) Erfinder: **Mörmann, Werner H., Dr.med.dent.,**
**Zweiackerstrasse 57, CH- 8063 Zürich (CH)**
Erfinder: **Brandestini, Marco, Dr.sc.techn.,**
**Gartenstrasse 10, CH- 8702 Zollikon (CH)**

(74) Vertreter: **Blum, Rudolf Emil Ernst, c/o E. Blum &**
**Co Patentanwälte Vorderberg 11, CH- 8044 Zürich**
**(CH)**

EP 0 160 797 B1

LIBER, STOCKHOLM 1989

## Beschreibung

Die vorliegende Erfindung betrifft einen Rohling zur Herstellung zahntechnischer Formteile durch Materialabtragung, wobei der grobe Rohlingskörper einen Abschnitt für die Halterung an einer Bearbeitungsmaschine besitzt. Als Bearbeitungsmaschine kann insbesondere eine geeignete Schleifvorrichtung verwendet werden. Die Bearbeitung des Rohlings bzw. die Steuerung der Schleifvorrichtung erfolgt üblicherweise über computergespeicherte Daten für die endgültige Form des zahntechnischen Formteils.

Bisher wurden zahntechnische Formteile beispielsweise in Formen gegossen, gesintert oder anderweitig hergestellt. Hierbei war es bekannt, Zahnmodelle, die als Form für die Herstellung von Porcellankronen dienen, zur besseren manuellen Handhabung auf einem Zwischenträger anzubringen (DE-PS-709 290). Zur maschinellen Bearbeitung von vorgeformten Kronen auf ihre endgültigen Masse ist ferner bekannt geworden, die vorgeformten Kronen mit einer Halterung für die Fixierung in einer Bearbeitungsmaschine zu versehen. Die vorgeformte Krone ist dadurch ortsfest eingespannt und das Bearbeitungswerkzeug wird der zu scnaffenden Kontur entlanggeführt (EP-Publ. Nr. 91 876). Eine entsprechende Halterung zum festen Einspannen eines Rohlings in einer Klemmvorrichtung ist in der EP-Publ. Nr. 86 167 dargestellt. Der festgeklemmte Rohling kann dann mittels einer komplizierten Aufhängung in allen drei Raumrichtungen bewegt werden. Bei allen erwähnten Einspanneinrichtungen ist nicht sichergestellt, dass Massungenauigkeiten des Bearbeitungswerkzeugs, die durch Abnutzung entstehen, sowie allfällige Massungenauigkeiten des Rohlings sowie dessen Einspannung vor der Bearbeitung auf einfache Weise eliminiert werden. Dies ist insbesondere von Bedeutung, wenn bei der Bearbeitung nicht nur das Bearbeitungswerkzeug, sondern auch der Rohling bewegt wird, indem sich dann die erwähnten Massungenauigkeiten in unkontrollierter Weise überlagern. Bei der Herstellung gebrauchsfertiger zahntechnischer Formteile aus Rohlingen ist indessen grosse Massgenauigkeit der Bearbeitung unbedingt erforderlich.

Es stellt sich damit die Aufgabe, einen Rohling zur Herstellung zahntechnischer Formteile durch Materialabtragung in der zahnärztlichen Praxis derart auszugestalten, dass die genannten Massungenauigkeiten ohne manuelle Justierung vor jeder Bearbeitung eliminiert werden können, ohne dass der Rohlingskörper selbst, der vorzugsweise aus dentaler Keramik besteht, massgenau geformt oder vorbearbeitet sein muss.

Diese Aufgabe wird erfindungsgemäss dadurch gelöst, dass der am groben Rohlingskörper angeordnete Abschnitt für die Halterung an einer Bearbeitungsmaschine durch einen eng tolerierten Halter (2) gebildet ist, der eine Achse (3) im Rohlingskörper festlegt und der eine Referenzfläche (4) bildet zur Ausrichtung der Ausgangslage des Bearbeitungswerkzeugs der Bearbeitungsmaschine bezüglich dieser Achse.

Damit wird erreicht, dass die derart bestimmte Achse eine Referenzlinie im Rohlingskörper bildet, bezüglich derer das Werkzeug während der gesamten Bearbeitung massgetreu positionierbar und führbar ist.

Vorzugsweise besteht der Halter aus einem anderen Material als der Rohlingskörper, beispielsweise aus Metall, welches sich in grossen Stückzahlen und in einfacher Weise massgetreu bearbeiten lässt. Das Material des Rohlingskörpers, vorzugsweise Dentalkeramik, dagegen kann ganz den zahnärztlichen Erfordernissen angepasst sein, ohne eine massgerechte und damit teure Vorbereitung zu benötigen.

Der Rohling weist damit Eigenschaften auf, die die Herstellung einzelner individueller zahntechnischer Formteile in der Zahnarztpraxis erlauben. Aufgrund der erfindungsgemässen Gestaltung des Rohlings sind dabei keine Testläufe oder Nachbearbeitungsschritte nötig. Das wäre angesichts der individuellen Formgebung jedes Formteiles zu aufwendig. Die Referenzanschläge des Rohlings stellen die massgerechte Bearbeitung von vornherein sicher.

Nachfolgend werden Ausführungsbeispiele der Erfindung anhand der beiliegenden Figuren näher beschrieben. Darin zeigen:

Fig. 1 eine erste Variante eines Rohlings in perspektivischer Darstellung;
Fig. 2 eine zweite Variante eines Rohlings; und
Fig. 3 eine Schnittansicht durch einen im wesentlichen gemäss Fig. 2 ausgebildeten Rohling.

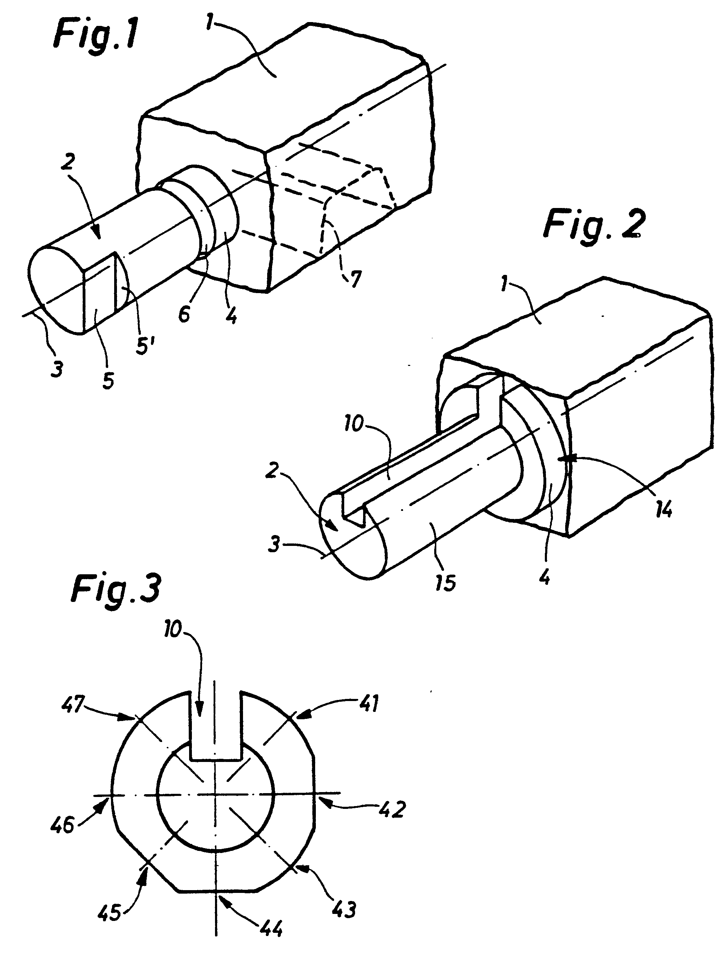

Aus Fig. 1 ist ersichtlich, dass der eigentliche Rohlingskörper 1, welcher in einer Bearbeitungsvorrichtung entsprechend vorgegebener Daten materialabhebend zu bearbeiten ist (z. B. Schleifen der Aussenkontur), mit einem als Halter ausgebildeten, eng tolerierten Abschnitt 2 versehen ist.

Dieser zylindrisch ausgebildete Abschnitt 2 und der eigentliche Rohling 1 können aus einem Stück bestehen oder als Rohling 1 mit separatem Ansatzstück 2 zusammengefügt sein.

Der Halter bzw. Abschnitt 2 wird mit dem Rohlingskörper 1 auf eine gemeinsame Achse 3 ausgerichtet und verklebt, verschweisst oder zusammengesintert, dies für den Normalfall, dass dieser Abschnitt 2 aus einem separaten Stück besteht.

Der Rohlingskörper 1 weist vorzugsweise eine derartige Formgebung auf, dass die nachfolgende Materialabtragung auf ein Minimum reduziert werden kann, was durch Aussparungen 7 erreichbar ist, um einerseits Material zu sparen und andererseits die Werkzeuge zu schonen.

Sinn und Zweck des Halters bzw. des Abschnittes 2 ist es, den Rohling immer in einer eindeutigen Lage mittels der Anschlagflächen 5 und 5' in einem Bearbeitungsgerät einzuspannen und gleichzeitig den Rohling exakt zentrieren zu können. Dies ist vor allem wichtig beim wiederholten Bearbeiten mehrerer gleicher oder zueinander passender Teile. Dies wir beispielsweise durch die eng tolerierte zylindrische Form des Abschnittes 2 garantiert. Der in der Zeichnung gezeigte Abschnitt weist ferner eine sogenannte Referenzfläche als Eichstelle 4 auf, welche erlaubt, die Lage und das kritische Mass des Bearbeitungswerkzeuges (z. B. Durchmesser der Schleifscheibe) bestimmen zu lassen, indem die Eichstelle 4 jeweils touchiert bzw. "angefahren" wird.

Schliesslich weist der als Halter ausgebildete Abschnitt 2 noch eine umlaufende Nut 6 auf, welche der Extraktion aus der Spannvorrichtung dient, wenn einmal alles Material des Rohlings abgetragen wurde und der Ansatz aus der Spannvorrichtung zu entfernen ist.

Der Ansatz 2 besteht zweckmässigerweise aus Metall, Keramik oder Kunststoff, während der eigentliche Rohling vorzugsweise aus Dentalkeramik oder einem anderen zahnärztlichen Restaurationsmaterial gefertigt ist.

In Fig. 2 ist eine Variante des Rohlings dargestellt, bei welcher der Rohlingskörper 1 in der beschriebenen Weise ausgebildet ist, der Halter 2 indessen für eine vereinfachte Fertigung leicht abgewandelt ist. Der Halter 2 weist dabei eine im wesentlichen rotationssymmetrische Form mit einem Längsschlitz 10 auf, der die Referenzanschläge bildet. Diese Ausgestaltung erlaubt die massgetreue Herstellung der Halter 2 aus einer vorgeschlitzten Stange auf einer Kopierdrehbank.

Der genannte Halter 2 ist pilzförmig mit einem Kopf 14 grösseren Durchmessers und einem Stiel 15 kleineren Durchmessers ausgebildet. Der Kopf bildet damit einerseits eine grössere Stirnfläche dar zur Verklebung mit dem Rohlingskörper 1, andererseits ist seine Seitenfläche 4 in der erläuterten Form als Referenzfläche ausgebildet. Der Stiel 15 dient zur Festlegung des Halters 2 in die Bearbeitungsmaschine, was mittels einer Spannzange bewerkstelligt wird.

Der Schlitz 10 stellt dabei einerseits sicher, dass der Rohling auf nur eine definierte Weise eingesetzt werden kann und liefert ferner Referenzanschläge.

In Fig. 3 schliesslich ist eine Schnittansicht durch den Kopf 14 eines besonders ausgestalteten Halters 2 gezeigt, der eine durch die Bearbeitungsmaschine lesbare codierte Information trägt. Der Schlitz 10, der in der Figur bei 12 Uhr steht, definiert die Winkellage des Halters beim Einsetzen in der Bearbeitungsmaschine. Der so eingesetzte Rohling wird dann um 45° im Uhrzeigersinn gedreht, so dass die Stelle 41, welche als Referenzfläche dient, bei 12 Uhr steht. Ein Schleifkopf der Bearbeitungsmaschine wird nun langsam gesenkt, bis der Schleifscheibenumfang die Stelle 41 berührt. Beim ersten Kontakt wird die Schleifscheibe in ihrer Rotation gebremst, was durch die Maschinensteuerung detektiert wird. Dieses Ereignis zeigt an, dass die Arbeitsfläche der Schleifscheibe sich gerade bei der Referenzfläche befindet und ihr Abstand zur Mittelachse demnach dem entsprechenden Radius entspricht. Damit ist die Ausgangslage des Bearbeitungswerkzeuges eindeutig festgelegt, was für die folgende Bearbeitung von grosser Bedeutung ist, weil davon die Massgenauigkeit des Formstückes abhängt. Die Winkellage andererseits ist - wie bereits erläutert - durch den Schlitz 10 festgelegt, während die Lage des Rohlings in Längsrichtung in der Regel unkritisch ist.

Da nun für verschiedene Anwendungen unterschiedliche Rohlingstypen verwendbar sind, die wiederum unterschiedliche Bearbeitungsabläufe nach sich ziehen, ist nun auf dem Halter gemäss Fig. 3 selbst eine entsprechende Information angeordnet, was eine entsprechende Programmierung durch den Operateur im Sinne der eingangs erwähnten Aufgabe erübrigt. Der Ablauf ist nun folgender: nach der beschriebenen ersten Berührung wird der Schleifkopf leicht angehoben und die Schleifscheibe erhält wieder ihre freie Rotationsgeschwindigkeit. Der Rohling wird dann um weitere 45° gedreht, bis die Position 42 dem Schleifwerkzeug gegenüber liegt. Indem der Schleifkopf wieder angenähert und mit Position 42 in Berührung gebracht wird, wobei die Rotationsgeschwindigkeit der Schleifscheibe erneut detektiert wird, wie beschrieben, kann die Bearbeitungsmaschine feststellen, ob bei 42 eine logische 0, entsprechend dem vollen Radius, oder eine logische 1, entsprechend einem reduzierten Radius, vorhanden ist. In dieser Weise stellen die Positionen 42 bis 47 eine siebenstellige, codierte Steuerinformation, im Beispiel 101100, dar, welche die Bearbeitungsart in Abhängigkeit von den Rohlingseigenschaften beeinflusst.

Der erfindungsgemässe Rohling erlaubt damit die Herstellung individueller, zahnmedizinischer Formteile aus Materialien, die im Rohzustand massungenau sind, ohne eine besondere manuelle Justierung beim Einspannen zu erfordern und entspricht damit den Erfordernissen für eine Verwendung in der zahnärztlichen Praxis. Dazu braucht nur der Halter in eine entsprechende Klemmhalterung an der Bearbeitungsmaschine eingeschoben zu werden, womit die Justierung bereits gegeben ist. Ist der Formteil verwendungsfertig aus dem Rohlingskörper 1 herausgearbeitet, so wird er in einem letzten Arbeitsgang mittels der Schleifscheibe vom Rest des Rohlings abgetrennt, welcher als Abfallstück aus der Bearbeitungsmaschine entfernt wird. Unmittelbar danach ist dieselbe Bearbeitungsmaschine ohne Neujustierung für die Herstellung eines anderen Formteiles bereit.

**Patentansprüche**

1. Rohling zur Herstellung zahntechnischer Formteile durch Materialabtragung mittels einem Schleifwerkzeug, mit einem groben Rohlingskörper (1) aus Zahn-Restaurationsmaterial, aus welchem der gesamte Formteil herausarbeitbar ist und einem Halteansatz (2) zur Halterung des Rohlingskörpers an der Schleifmaschine, dadurch gekennzeichnet, dass der Halteansatz (2) eine kreiszylindrische Kontur aufweist, wobei die durch die Zylinderachse definierte Achse (3) durch die Mitte des Rohlingskörpers (1) verläuft und der Halteansatz (2) für die Festlegung der Winkellage des Rohlings um diese Achse (3) mit mindestens einer, parallel zu dieser Achse verlaufenden Anschlagfläche (5; 10) versehen ist sowie an seinem, dem Rohlingskörper (1) zugewandten Ende eine für das Schleifwerkzeug freiliegende, mindestens abschnittsweise zylindrische und zur Achse konzentrisch angeordnete Referenzfläche (4; 14; 41) aufweist, die innerhalb einer engen Toleranz einen vorbestimmten radialen Abstand zur Achse besitzt, derart, dass das Schleifwerkzeug durch das Anfahren an diese Referenzfläche bezüglich der genannten Achse radial justierbar ist.

2. Rohling nach Anspruch 1, dadurch gekennzeichnet, dass der Rohlingskörper (1) aus keramischem Material und der Halteansatz (2) aus Metall besteht und eine senkrecht zur Zylinderachse ausgerichtete Stirnfläche besitzt, mittels welcher er an eine ebene Haltefläche des Rohlingskörper (1) geklebt ist.

3. Rohling nach einem der vorangehenden Ansprüche, dadurch gekennzeichnet, dass die Referenzfläche von einem im wesentlichen zylindrischen Abschnitt (4) des Halteansatzes gebildet wird, der stirnseitig an eine ebene Haltefläche des Rohlingskörpers (1) geklebt ist.

4. Rohling nach Anspruch 3, dadurch gekennzeichnet, dass der Abschnitt (4) einen grösseren Durchmesser besitzt, als der restliche Teil des Halteansatzes, wobei dieser Durchmesser im wesentlichen den Seitenlängen der Haltefläche des Rohlingskörpers (1) entspricht.

5. Rohling nach einem der vorangehenden Ansprüche, dadurch gekennzeichnet, dass der Halteansatz über seine gesamte Länge eine axial verlaufende Nut (10) aufweist, welche die Anschlagfläche bildet.

6. Rohling nach einem der vorangehenden Anschläge, dadurch gekennzeichnet, dass die Referenzfläche weitere Flächenabschnitte besitzt, die bestimmten Winkellagen um die Achse (3) zugeordnet sind und jeweils einen von zwei vorbestimmten Abständen zur Achse besitzen, derart, dass durch aufeinanderfolgendes Anfahren mittels dem Schleifwerkzeug zusätzlich zur radialen Justierung eine codierte, binäre Information abtastbar ist.

7. Verwendung des Rohling nach einem der vorangehenden Ansprüche zur Herstellung zahntechnischer Formteile mittels einem Schleifwerkzeug, dadurch gekennzeichnet, dass der Rohling mit seinem Halteansatz in eine Spannvorrichtung des Schleifwerkzeugs eingesetzt wird und dass nach dem Einsetzen das Schleifwerkzeug zunächst die freiliegende Referenzfläche anfährt, womit die radiale Lage des Schleifwerkzeugs justiert wird, wonach aus dem Rohlingskörper der Formteil verwendungsfertig herausgearbeitet wird und in einem letzten Arbeitsgang mit dem Schleifwerkzeug vom restlichen Rohling, insbesondere vom Halteansatz, abgetrennt wird.

8. Verwendung nach Anspruch 7, dadurch gekennzeichnet, dass das Schleifwerkzeug bei rotierender Schleifscheibe die freiliegende Referenzfläche anfährt, und dass die Bremsung der Schleifscheibenrotation bei Berührung der Referenzfläche detektiert und damit die radiale Lage des Schleifscheibenumfangs bezüglich der Achse des Rohlings festgestellt wird.

9. Verwendung nach einem der Ansprüche 7 oder 8, wobei die Referenzfläche weitere Flächenabschnitte besitzt, die bestimmten Winkellagen um die Achse (3) zugeordnet sind und jeweils einen von zwei vorbestimmten Abständen zur Achse besitzen, dadurch gekennzeichnet, dass der Rohling nacheinander in die entsprechenden Winkellagen zur Schleifscheibe gedreht wird und diese den jeweiligen Flächenabschnitt anfährt, wobei mittels der so aufgenommenen codierten Information die Bearbeitungsart des Schleifwerkzeugs beeinflussbar ist.

**Claims**

1. Blank for the production of formed pieces for dental technics by means of a removing of material by means of a grinding tool, with a rough blank body (1) of a dental restoring material, from thich the complete formed piece can be machined, and a supporting attachment (2) for the supporting of the blank body (1) at the grinding machine, characterized in that the supporting attachment (2) comprises the shape of a circular cylinder, whereby the axis (3) defined by the axis of the cylinder extends through the center of the blank body (1) and the supporting attachment (2) in order to set the angular position of the blank is provided with at least one abutment surface (5; 10) extending parallel to this axis as well as a reference surface (4; 14; 41) located at its end facing the blank body (1), being exposed for the grinding tool and being at least in sections cylindric and concentrically to the axis, and which has within a tight tolerance a predetermined radial distance from the axis, such that the grinding tool is radially adjustable relative to said axis by a moving into abutment at said reference surface.

2. Blank according to claim 1, characterized in that the blank body (1) consists of a ceramic material and the supporting attachment (2) of metal and comprises a face surface aligned perpendicularly with the axis of the cylinder, by means of which it is bonded to a plane supporting surface of the blank body (1).

3. Blank according to one of the preceding claims, characterized in that the reference surface is formed by a substantially cylindrical section (4) of the supporting attachment which at its face surface is glued to a plane mounting surface of the blank body (1).

4. Blank according to claim 3, characterized in that the diameter of the section (4) is larger than that of the balance of the supporting attachment, whereby this diameter corresponds substantially to the lengths of the sides of the mounting surface of the blank body (1).

5. Blank according to one of the preceding claims, characterized in that the supporting attachment comprises a groove (10) extending axially along its complete length and forming the abutment surface.

6. Blank according to one of the preceding claims, characterized in that the reference surface comprises further area sections which are allocated to predetermined angular positions around the axis (3) and have one respective of two predetermined distances from the axis, such that by a consecutive moving into abutment by a grinding tool a coded, binary information can be sensed additionally to the radial adjusting.

7. Use of the blank according to one of the preceding claims for the production of formed pieces for the production of formed pieces for dental technics by means of a grinding tool, characterized in that the blank is inserted by its supporting attachment into a chuck of the grinding machine and that after the inserting the grinding tool initially moves into abutment with the exposed reference surface wherewith the radial position of the grinding tool is adjusted, whereafter the formed piece is worked out of the blank body ready for use and in that it is severed at a final processing step by the grinding tool from the rest of the blank, specifically of the support attachment.

8. Use according to claim 7, characterized in that the grinding tool is moved into abutment with the exposed reference area at a rotating grinding disc, and that the breaking of the rotation of the grinding disc upon contacting the reference area is detected and therewith the radial position of the circumference of the grinding disc relative to the axis of the blank is determined.

9. Use according to one of the claims 7 or 8, whereby the reference area comprises further reference surface areas allocated to predetermined axial positions around the axis (3) and have one respective of two distances from the axis, characterized in that the blank is rotated consecutively into the corresponding angular positions relative to the grinding disc and moves into abutment to the respective reference area, whereby the particulars of the machining of the grinding tool may be influenced by the accordingly sensed coded information.

## Revendications

1. Ebauche pour la fabrication de pièces façonnées en technique dentaire et par enlèvement de matière au moyen d'un outil de meulage, avec un corps d'ébauche (1) en matière propre à la restauration des dents, duquel on peut tirer toute la pièce façonnée, et avec un prolongement de maintien (2) pour le maintien du corps d'ébauche dans la machine à meuler, caractérisée en ce que le prolongement de maintien (2) présente un contour en forme de cylindre à base circulaire, l'axe (3) défini par l'axe du cylindre passant par le milieu du corps d'ébauche (1) et le prolongement de maintien (2) étant pourvu, pour la fixation de la position angulaire de l'ébauche autour de cet axe (3), d'au moins une surface d'application (5; 10) s'étendant parallèlement à cet axe, ainsi que presentant à son extrémité orientée vers le corps d' ébauche (1), une surface de référence (4; 14; 41) libre pour l'outil de meulage, au moins partiellement cylindrique et disposée concentriquement à l'axe, qui est, dans des limites de tolérance étroites, à une distance radiale prédéterminée de l'axe, de telle sorte que l'outil de meulage, en accédant à cette surface de référence, soit ajustable radialement par rapport à l'axe précité.

2. Ebauche suivant la revendication 1 , caractérisée en ce que le corps d'ébauche (1) est fait d'une matière céramique et en ce que 1e prolongement de main tien (2) est fait de métal et possède une surface frontale dirigée perpendiculairement à l'axe du cylindre, surface par laquelle il est collé à une surface de maintien plane du corps d'ébauche (1).

3. Ebauche suivant l'une des revendications précédentes, caractérisée en ce que la surface de référence est formée par une partie (4), en principe cylindrique, du prolongement de maintien qui est collé par sa surface frontale à une surface de maintien plane du corps d'ébauche (1).

4. Ebauche suivant la revendication 3, caractérisée en ce que la partie (4) a un diamètre plus grand que la partie restante du prolongement de maintien, ce diamètre correspondant en principe aux longueurs des côtés de la surface de maintien du corps d'ébauche (1).

5. Ebauche suivant l'une des revendications précédentes, caractérisée en ce que le prolongement de maintien présente sur toute sa longueur une rainure axiale (10) qui forme la surface d'application.

6. Ebauche suivant l'une des revendications précédentes, caractérisée en ce que la surface de référence présente d'autres parties de surface qui sont associées à des positions angulaires déterminées autour de l'axe (3) et qui présentent chaque fois une distance d'entre deux distances prédéterminées à l'axe, de telle sorte que, par une approche successive au moyen de l'outil de meulage, on puisse, en plus de l'ajustement radial, percevoir une information binaire codée.

7. Emploi de l'ébauche suivant l'une des revendications précédentes , pour la fabrication de pièces façonnées en technique dentaire, au moyen d'un outil de meulage, caractérisé en ce qu'on engage l'ébauche, par son prolongement de maintien, dans un dispositif de serrage de l'outil de meulage, et en ce qu'après l'engagement, l'outil de meulage s'applique d'abord à la surface de référence libre, ce qui règle la position radiale de l'outil de meulage, après quoi la pièce façonnée est travaillée pour être prête à l'emploi, à partir du corps d'ébauche, et la pièce façonnée est, dans une dernière passe de travail avec l'outil de meulage, séparée du reste de l'ébauche, en particulier du prolongement de maintien.

8. Emploi suivant la revendication 7, caractérisé en ce que l'outil de meulage approche la surface de référence libre alors que la meule tourne, et en ce que le freinage de la rotation de la meule est détecté lors du contact de la surface de référence et qu'ainsi est déterminée la position radiale du pourtour de la meule par rapport à l'axe de l'ébauche.

9. Emploi suivant l'une des revendications 7 ou 8, où la surface de référence présente d'autres parties de surface qui sont associées à des positions angulaires déterminées autour de l'axe (3) et qui présentent chaque fois une distance d'entre deux distances prédéterminées à l'axe, caractérisé en ce que l'ébauche est tournée par rapport à la meule dans les positions angulaires correspondantes et en ce que la meule attaque chaque fois la partie de surface, le genre de travail de l'outil de meulage étant influençable au moyen de l'information codée ainsi reçue.

Fig.1

Fig. 2

Fig.3